# EUROPEAN PATENT APPLICATION

(11) **EP 1 055 938 A2**
(43) Date of publication of application: **29.11.2000**
(21) Application number: 00110283.9
(22) Date of filing: 23.05.2000
(51) Int. Cl.: G01S 7/491, G01S 17/08

(54) **Light source means and light wave range finder**

(30) Priority: 24.05.1999 JP 14413899
(71) Applicant: KABUSHIKI KAISHA TOPCON, Tokyo 174 (JP)
(72) Inventor: Ohtomo, Fumio, Tokyo 174 (JP); Ohishi, Masahiro, Tokyo 174 (JP); Tokuda, Yoshikatsu, Tokyo 174 (JP)
(74) Representative: Altenburg, Udo, Dipl.-Phys.

(57) **Abstract**

The present invention relates to a light source means, etc. for use in the measurement of a distance. Particularly, the present invention aims at providing a light source means using a light source of a low coherence and a light wave range finder capable of measuring a distance by using such a light source. A light source driving section drives a light source section, a light receiving section receives light from the light source section via an object to be measured, and a processing means calculates a distance up to the object to be measured on the basis of a light signal received by the light receiving section. The light source section, which comprises an SLD (super-luminescence diode) or a laser diode can emit a visible or invisible light beam.

## Description

### BACKGROUND OF THE INVENTION

The present invention relates to a light source means for use in the measurement of distance. Particularly, the invention is concerned with a light source means and a light wave range finder capable of measuring a distance with use of a light source of a low coherence.

A conventional light wave range finder uses a light emitting diode, receives an echo pulse reflected from a corner-cube prism as an object to be measured, and determines a distance on the basis of the time required until reception of a light pulse. Therefore, the maximum distance capable of being measured by the light wave range finder depends on the luminance of a light source section and the maximum measurable distance in a light wave range finder using a light emitting diode has heretofore been 2 to 3 km.

The adoption of a semiconductor laser having a high luminance may be effective for increasing the maximum measurable distance. The size and power consumption of a continuous light emission type semiconductor laser are about the same as in the conventional light emitting diode and not only a direct modulation using a driving current is feasible but also replacement with the light emitting diode is easy. In the continuous light emission type semiconductor laser, moreover, it is possible to realize a light wave range finder of a high precision and a higher modulation frequency because its light emission response speed is higher than that of the light emitting diode. Further, a semiconductor pulse laser has a large peak power and is therefore characteristic in that it is possible to increase the maximum measurable distance and also possible to perform a non-prism measurement not using a corner-cube prism, although it is different in the range finding method from the conventional light wave range finder using a continuous oscillation type semiconductor laser.

However, the above conventional light wave range finder, no matter which of the continuous oscillation type semiconductor laser and the semiconductor pulse laser may be used, involves the problem that the emission spectrum is narrow and coherence is high in comparison with the light wave range finder using a light emitting diode.

If the coherence of the light source section is high, there arises the problem that there occur unnecessary interferences in various portions. For example, there occur unevenness in a near field pattern and a far field pattern caused by a speckle in a multi-mode optical fiber and a speckle at an exit end of the same optical fiber, a speckle variation caused by a mode jump of the emission wavelength, and a variation in modulated waveform in intensity modulation.

Particularly, in the light wave range finder there arise such problems as unevenness in waveform caused by a speckle in a light emission-side optical system, a speckle variation caused by a mode jump in the light source section, and a variation in the state of interference of emitted light caused by fluctuation of the atmosphere and the resulting unevenness in a spatial waveform. Once such unevenness in waveform occurs, a centroid position of modulated waveform varies, causing deterioration of the measurement accuracy.

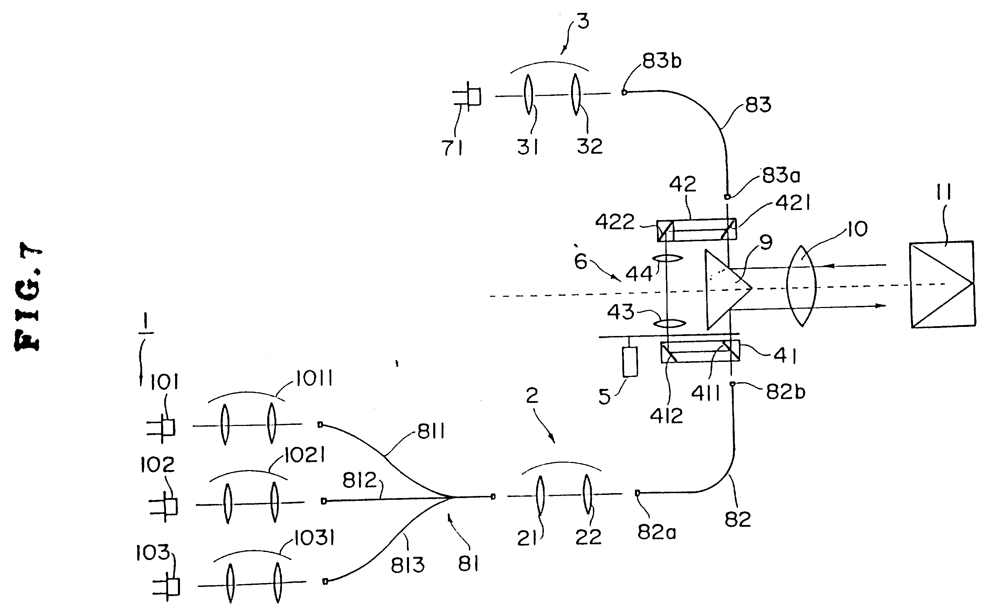

For diminishing the coherence in question there has been proposed such a light wave range finder as shown in Fig. 7. This light wave range finder is made up of a light source section 1, a light source-side optical fiber 81, a first condenser lens 2, a light emission-side optical fiber 82, a pair of split prisms 41 and 42, an optical path switching chopper 5, a reflecting prism 9, an internal optical path 6, an objective lens 10, a light receiving-side optical fiber 83, a second condenser lens 3, and an APD (avalanche photodiode) 71.

A corner-cube prism 11 corresponds to an object to be measured which is disposed at a position away from the body of the light wave range finder and which functions to reflect light.

The light source section 1 is composed of plural semiconductor lasers 101, 102 and 103. The semiconductor lasers are adapted to emit light beams at different central wavelengths (λ₁, λ₂, λ₃), respectively, and are modulated and driven simultaneously.

The semiconductor lasers 101, 102 and 103 are respectively provided with condenser lenses 1011, 1021 and 1031 for light source, which are connected to end portions 811, 812 and 813 of a light source-side optical fiber 81.

The light source-side optical fiber 81 is configured so as to be bundled at an exit end thereof and functions to mix modulated light beams emitted from the three semiconductor lasers in the light source section 1 and connect a secondary light source of a low coherence to a light receiving end 82a of the light emission-side optical fiber 82.

The optical path switching chopper 5 is for switching over from one to another optical path. The APD 71, which corresponds to a light receiving means, receives light beam emitted from the light source section 1. The split prism 41 is composed of half mirrors 411 and 412, while the split prism 42 is composed of half mirrors 421 and 422. The light source section 1 side and the split prism 41 are coupled together through the light emission-side optical fiber 82. Likewise, the split prism 42 and the light receiving element 71 side are coupled together through the light receiving-side optical fiber 83.

Modulated light beam emerging from the objective lens 10 is reflected by the corner-cube prism 11, again passes through the objective lens 10, and is reflected by the reflecting prism 9 and is sent to the split prism 42. The received pulse beam passes through the half mirror 421 of the split prism 42 and is coupled to a light receiving end 83a of the light receiving-side optical fiber 83.

In the case where the optical path switching chopper 5 has selected the internal range finding optical path 6, the modulated beam passes through the internal range finding optical path 6 and is sent to the split prism 42. The modulated beam is reflected by the half mirrors 421 and 422 and is coupled to the light receiving end 83a of the light receiving-side optical fiber 83. Modulated beam emitted from an exit end 83b of the optical fiber 83 is coupled to the APD 71 by second condenser lenses 31 and 32.

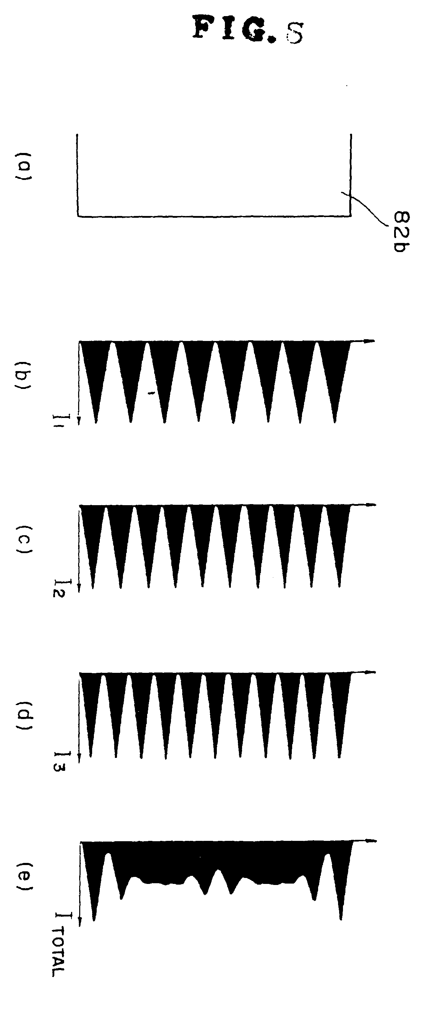

Fig. 8 illustrates a speckle intensity distribution at the exit end 82b of the light emission-side optical fiber 82. The term "speckle" as referred to herein means a pattern formed in a cross section of laser beam. More particularly, the speckle occurs due to interference of laser beams reflected at various surface positions.

The speckle at the exit end 82b of the light emission-side optical fiber 82 is the sum of speckle patterns formed by the semiconductor lasers of different central wavelengths and it is possible to lower the speckle contrast as a whole. However, it goes without saying that the use of plural light sources is costly, and it is necessary to ensure a uniform quantity of emitted light.

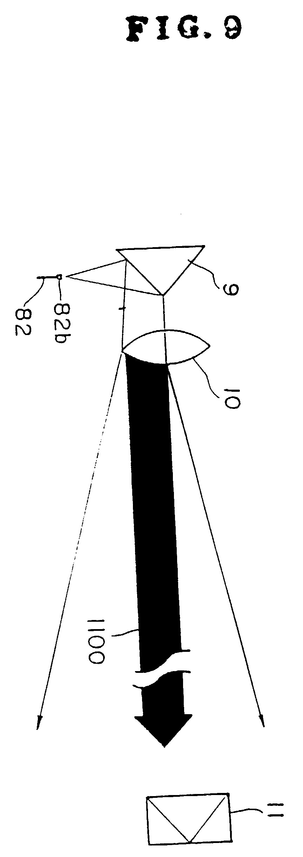

Fig. 9 illustrates how the light beam emitted from the light wave range finder is influenced by the atmosphere while it is propagated through the atmosphere. The refractive index of the atmosphere changes with changes in temperature, atmospheric pressure, and humidity.
Particularly, in the daytime, there occurs unevenness in the refractive index of the atmosphere due to the influence of the sunlight, which refractive index varies with the lapse of time, causing waving of air. Such a change in refractive index of the atmosphere exerts an influence on the light velocity and hence there appears a change in an optical distance relative to the emitted light wavelength. This influence becomes more marked in case of a long distance measurement wherein the corner-cube prism 11 is disposed at a remote position.

In connection with the light beam emitted from the light wave range finder, a study will now be made about a light beam 1100 in the portion which is reflected by the corner-cube prism 11. If part of the light beam 1100 changes in optical distance due to fluctuation of the air, the beam 1100 comes to assume a state of interference at the stage of being received by the body of the light wave range finder. Since the fluctuation of the atmosphere varies with the lapse of time, the interference at the light receiving stage also varies with time, and this variation, as a variation in modulated waveform, exerts an influence on the range finding accuracy.

### SUMMARY OF THE INVENTION

In the present invention, a light source driving section drives a light source section, a light receiving section receives a light beam from the light source section through an object to be measured, and on the basis of a signal received in the light receiving section a processing means calculates a distance up to the object to be measured. The light source section, which is configured by an SLD (super-luminescence diode) or a laser diode, can emit a visible or invisible light beam.

### BRIEF DESCRIPTION OF THE DRAWINGS

The drawings illustrate an embodiment of the present invention, in which:
Fig. 1 is a diagram showing a configuration embodying the present invention;
Fig. 2 is a diagram showing an electrical configuration embodying the present invention;
Fig. 3 is a diagram explaining a Michelson interferometer 2000;
Fig. 4 is a diagram showing a relation between spectrum in a light source section and an interferogram;
Fig. 5 is a diagram explaining a principle of the present invention;
Fig. 6 is a diagram also explaining a principle of the present invention;
Fig. 7 is a diagram explaining the prior art;
Fig. 8 is a diagram also explaining the prior art; and
Fig. 9 is a diagram further explaining the prior art.

### DESCRIPTION OF THE INVENTION

### [Principle]

The reason why an LED is suitable as a light source in a light wave range finder is that its emission spectrum width is very wide, indicating a low coherence.

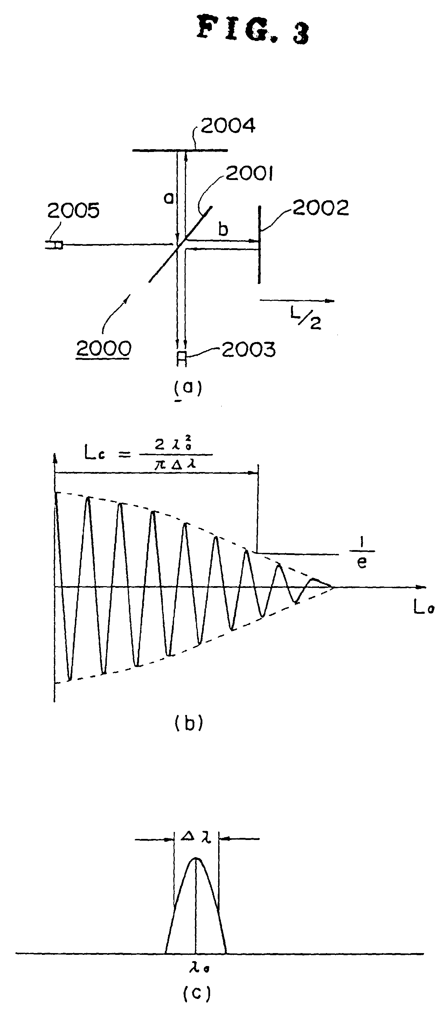

Generally, for obtaining an index of coherence based on the width of spectrum, there is made observation of an interferogram in accordance with Fourier spectroscopy. For this measurement there is used such a Michelson interferometer 2000 as shown in Fig. 3(a). The Michelson interferometer 2000 is made up of a beam splitter 2001, a movable plane mirror 2002, a detector 2003, a fixed plane mirror 2004, and a measuring light source 2005.

A light beam emitted from the light source 2005 is split into an optical path "a" and an optical path "b" by means of a beam splitter 2001. The beam traveling through the optical path "a" is reflected by the fixed plane mirror 2004, then passes through the beam splitter 2001 and enters the detector 2003, while the beam traveling through the optical path "b" is reflected by the movable plane mirror 2002, then is reflected by the beam splitter 2001 and enters the detector 2003.

The intensity of the light beam detected by the detector 2003 with movement of the movable plane mirror 2002 is called interferogram, which takes such a shape as shown in Fig. 3(b). In the same figure, a change in optical path length caused by movement of the movable plane mirror 2002 is plotted along the axis of abscissa, while the light beam intensity detected by the detector 2003 is plotted along the axis of ordinate.

By Fourier transform of the waveform shown in Fig. 3(b) there can be obtained such a spectrum of the measuring light source 2005 as shown in Fig. 3(c). It is Fourier spectroscopy that uses such a method to obtain a coherence index based on the width of spectrum.

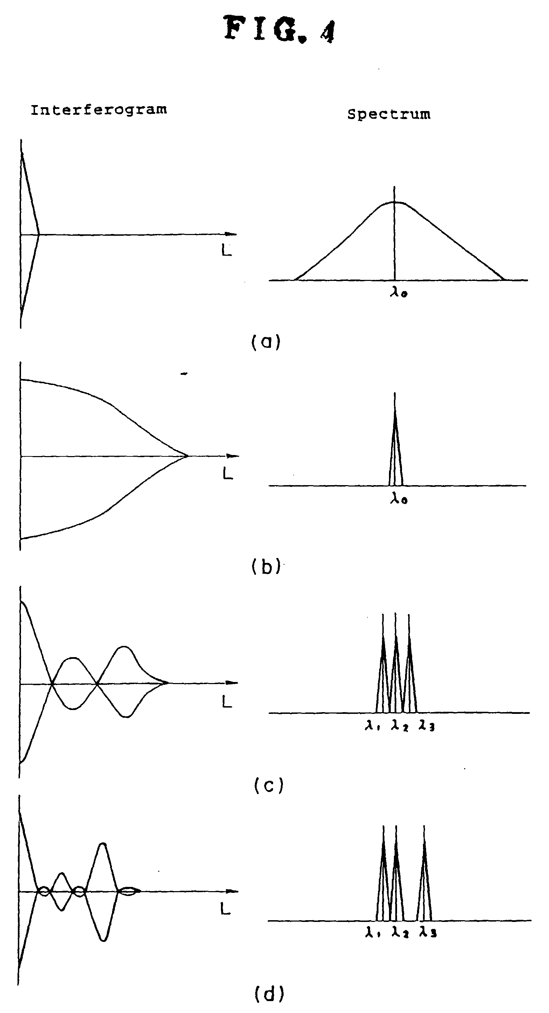

Now, with reference to Figs. 4(a) to 4(d), a description will be given below of a relation between the light source spectrum and the interferogram.

Fig. 4(a) shows a case where one LED is used. Fig. 4(b) shows a case where there are used a plurality of semiconductor lasers of the same central wavelength. Fig. 4(c) shows a case where there are adopted a plurality of semiconductor lasers having central wavelengths spaced apart to a degree equal to the spread of wavelength of each semiconductor laser (light source). Fig. 4(d) shows a case where there are adopted a plurality of semiconductor lasers having central wavelengths spaced apart in an unequal manner.

The interferogram is described with only its envelope.

Reference to Figs. 4(a) and 4(b) shows that in case of adopting plural semiconductor lasers of the same central wavelengths (Fig. 4(b)), there occurs interference over a fairly wide range as compared with the case where one LED is used (Fig. 4(a)).

In the case where the central wavelengths of plural semiconductor lasers are spaced apart to an extent equal to the spread of the wavelength of each semiconductor laser (light source) (Fig. 4(c)), in comparison with the case where plural semiconductor lasers are of the same central wavelength (Fig. 4(b)), although there occurs a secondary interference, the range of a primary interference is small and is about one fifth of the case where plural semiconductor lasers are of the same central wavelength.

In the case where there are adopted plural semiconductor lasers having central wavelengths spaced apart in an unequal manner (Fig. 4(d)), the range of interference becomes still smaller and the range of a primary interference is about one tenth of the case where there are used plural semiconductor lasers of the same central wavelength.

Thus, it is seen that a wide spectral width of a light source results in a lowering of coherence, which is suitable for a light wave range finder. It is also seen that even in case of a narrow spectral width and high coherence, the coherence becomes lower as the number of spectra increases, which is also suitable for a light wave range finder.

In the prior art shown in Fig. 7, the number of spectra is increased by increasing the number of light sources, thereby diminishing the coherence of the light sources, while in the present invention the spectral width and the number of spectra in the light source are increased by using an SLD (super-luminescence diode) or by driving an LD (laser diode) with a pulse, whereby the light source coherence can be diminished.

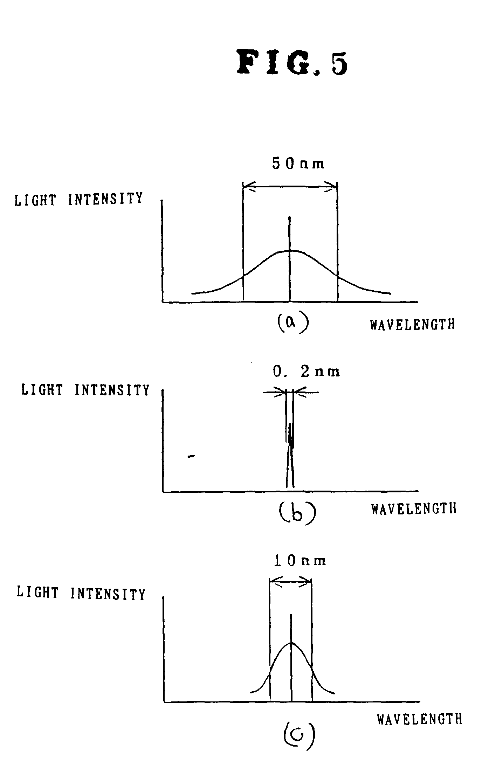

Figs. 5(a) to 5(c) illustrate spectral widths obtained when LED (light emitting diode), LD (laser diode), and SLD (super-luminescence diode) are driven with a direct current (or low frequency). The spectral width is defined in terms of a half-width Δλ.

The spectral half-width Δλ means a full-width at half maximum (FWHM) in the case where a spectra shape is approximate to an envelop.

Fig. 5(a) shows a spectral width obtained using an LED (light emitting diode), in which the spectral half-width Δλ is 50 nm.

Fig. 5(b) shows a spectral width obtained using an LD (laser diode), in which the spectral half-width Δλ is 0.2 nm.

Fig. 5(c) shows a spectral width obtained using an SLD (super-luminescence diode), in which the spectral half-width Δλ is 10 nm.

Thus, in the ordinary mode of use of an LD (laser diode), the spectral half-width Δλ is the shortest and unnecessary interference is apt to occur.

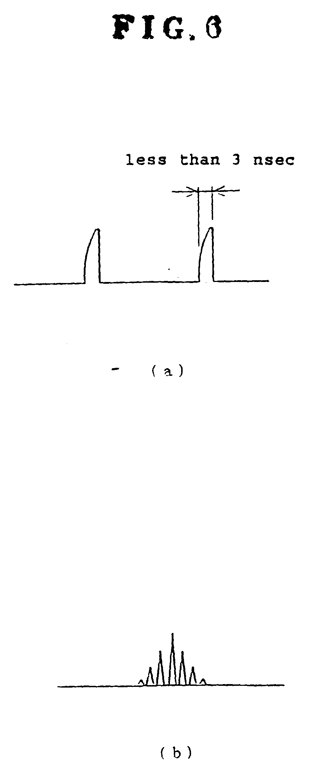

In view of this point it is Fig. 6(b) that shows a spectral width obtained by driving the LD (laser diode) of Fig. 5(b) with a short pulse of less than 3 nsec as in Fig. 6(a).

If the LD (laser diode) is driven with a short pulse of less than 3 nsec, excitation will become incomplete and the laser diode will generate a light beam at plural wavelengths, resulting in the spectral half-width Δλ becoming larger. This is advantageous in that unnecessary interference is difficult to occur.

### [Embodiment]

Now, with reference to the drawings, a description will be given below of an embodiment in which an LD (laser diode) is driven with a short pulse of less than 3 nsec as in Fig. 6(a).

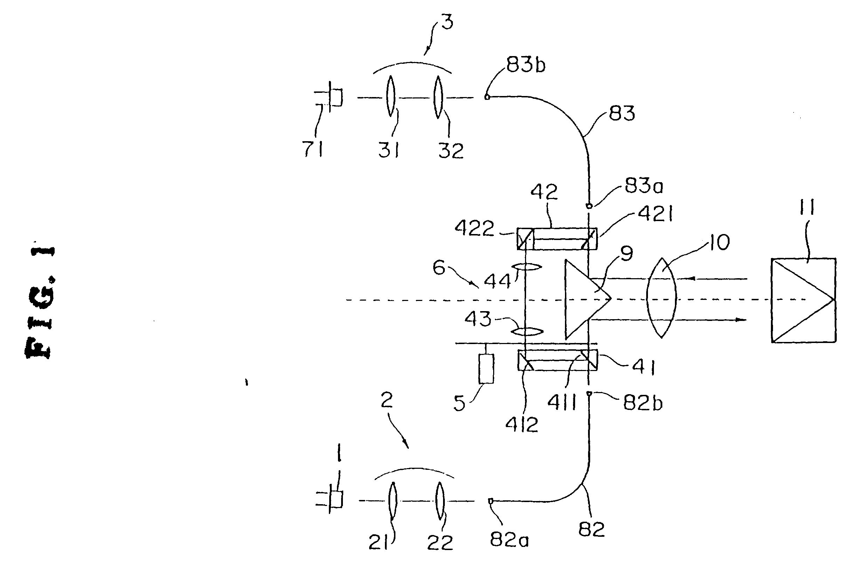

As shown in Fig. 1, a light wave range finder according to this embodiment is made up of a light source section 1, a light source-side optical fiber 81, a first condenser lens 2, a light emission-side optical fiber 82, a pair of split prisms 41 and 42, an optical path switching chopper 5, a reflecting prism 9, an internal optical path 6, an objective lens 10, a light receiving-side optical fiber 83, a second condenser lens 3, and an APD (avalanche photodiode) 71.

A corner-cube prism 11 corresponds to an object to be measured which is disposed at a position away from the body of the light wave range finder, and possesses a light reflecting function.

In the light source section 1, an LD (laser diode) is driven with a short pulse of less than 3 nsec as in Fig. 6(a). The light beam emitted from the light source section 1 is a visible light beam.

In the light source section 1, the LD (laser diode) driven with such a short pulse as shorter than 3 nsec may be substituted by an SLD (super-luminescence diode). The light beam emitted from the SLD is also a visible light beam.

The semiconductor laser 1 is provided with the first condenser lens 2 for condensing the emitted light beam to an end portion 82a of the light emission-side optical fiber 82.

The optical path switching chopper 5 is for switching over from one to another optical path. The APD 71, which corresponds to a light receiving means, receives the light beam emitted from the light source section 1. The split prism 41 is composed of half mirrors 411 and 412, while the split prism 42 is composed of half mirrors 421 and 422. The light source section 1 side and the split prism 41 are coupled together through the light-emission side optical fiber 82. Further, the split prism 42 and the light receiving element 71 side are coupled together through the light receiving-side optical fiber 83.

Modulated light beam emerging from the objective lens 10 is reflected by the corner-cube prism 11, again passes through the objective lens 10, and is reflected by the reflecting prism 9 and is sent to the split prism 42. The received pulse beam passes through the half mirror 421 in the split prism 42 and is coupled to a light receiving end 83a of the light receiving-side optical fiber 83.

In the case where the optical path switching chopper 5 has selected the internal range finding optical path 6, the modulated beam passes through the internal range finding optical path 6 and is sent to the split prism 42. In the split prism 42 the modulated beam is reflected by the half mirrors 421 and 422 and is coupled to the light receiving end 83a of the light receiving-side optical fiber 83. The modulated beam outputted from an exit end 83b of the light receiving-side optical fiber 83 is coupled to the APD 71 through second condenser lenses 31 and 32.

The APD 71 corresponds to the light receiving section.

Other components than the light source section 1 are the same as in the prior art shown in Fig. 7, so explanations thereof will here be omitted.

The configuration of an electric circuit used in this embodiment will be described below in detail.

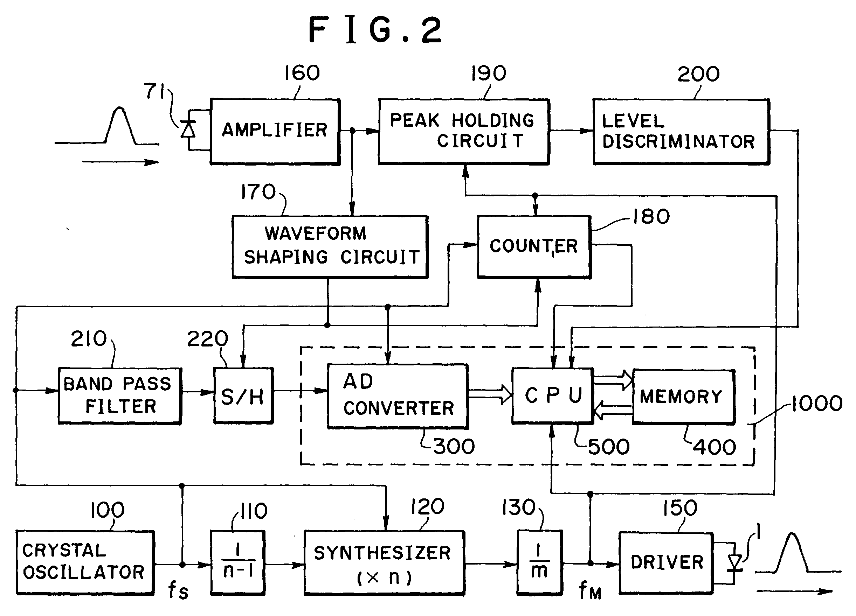

As shown in Fig. 2, the electric circuit is made up of a crystal oscillator 100, a first frequency divider 110, a synthesizer 120, a second frequency divider 130, the light source section 1, a semiconductor laser driver 150, the APD 71, an amplifier 160, a waveform shaping circuit 170, a counter 180, a peak holding circuit 190, a level discriminator circuit 200, a band pass filter 210, a sample and hold (S/H) circuit 220, an AD converter 300, a memory 400, and a CPU 500.

The crystal oscillator 100 is a reference signal generating means and generates a reference signal of 15 MHz. The reference signal is fed to all of the first frequency divider 110, synthesizer 120, band pass filter 210, and counter 180. The reference signal fed to the first frequency divider 110 is frequency-divided (1/100) into a 150 KHz signal by the same frequency divider, which signal is then fed to the synthesizer 120. The synthesizer 120 synthesizes a 15.15 MHz signal from both the 150 KHz signal fed from the first frequency divider 110 and the 15 MHz signal fed from the crystal oscillator 100, and outputs the signal thus-created to the second frequency divider 130. The second frequency divider 130 divides the frequency of the 15.15 MHz signal fed from the synthesizer 120 to 1/5000 and creates a 3030 KHz signal, which is fed to the driver 140. Output signals provided from the first frequency divider 110, second frequency divider 130, and synthesizer 120 are binary-coded signals.

The semiconductor laser driver 150 is for driving the LD (laser diode) in the light source section 1 with such a short pulse as is less than 3 nsec. It corresponds to the light source driving section.

Modulated light beam emitted from the light source section 1 passes through the optical system and is received by the APD 71. The APD 71, which corresponds to a light receiving element, is a diode capable of inducing an avalanche multiplication upon application of a deep bias to its pn junction and affording a gain. The APD 71 receives a modulated beam having passed through an internal reference optical path or a modulated beam having passed through an external range finding optical path. The modulated beam is converted to an electric signal by the APD 71, which signal is sent to the amplifier 160.

The amplifier 160 is for amplifying the electric signal inputted from the APD 71. The amplified detection signal is fed to both the waveform shaping circuit 170 and the peak holding circuit 190.

The waveform shaping circuit 170 provides the received signal to both the sample and hold (S/H) circuit 220 and the counter 180. The counter 180 counts the time required until reception of the modulated beam on the basis of the 15 MHz signal provided from the crystal oscillator 100.

The 15 MHz signal fed from the crystal oscillator 100 to the band pass filter 210 becomes a sine wave signal, which is sent to the sample and hold circuit 220. The sample and hold circuit 220 samples and holds data from the reception signal outputted from the waveform shaping circuit 170, which data is then subjected to AD conversion in the AD converter 300. The resulting digital data is then stored in a predetermined memory 400. Upon completion of the AD conversion, a conversion end signal is outputted to the CPU 500.

The above processing from the emission of light beam in the light source section 1 up to the storage of AD-converted data into the memory 400 is performed for both external range finding optical path and internal reference optical path. That is, a phase difference φ in waveform between the AD-converted data obtained through the internal reference optical path and that obtained through the external range finding optical path corresponds to an optical path difference. If each waveform is subjected to Fourier transform to obtain phase information on a basic component wave, then from the resulting phase difference it is possible to obtain a precisely measured distance of below 10 m unit. Also as to a roughly measured distance, it can be obtained with a precision of 10 m from a difference in count value in the counter 180 for both the external range finding optical path and the internal reference optical path. By combining the roughly measured distance and the precisely measured distance with each other it is possible to determine an actual distance from the light wave range finder up to the object to be measured. A configuration including CPU 500 which performs these operations corresponds to the processing means.

Since the light source means used in the above embodiment comprises an SLD or LD which emits a visible light beam, it also functions as a laser pointer by being interlocked with an in-focus mechanism.

Although the electrical configuration adopts a pulse drive system, it goes without saying that the effects of the present invention can be attained also by using a phase contrast method for example.

Although the light source means used in the above embodiment is of the type which emits a visible light, there may be adopted a light source means which emits an invisible light.

Thus in the present invention, since the light source section constituted by a laser diode for emitting a visible or invisible light beam emits a visible light beam and the light source driving section can drive the range finding light source section with use of a pulse shorter than 3 nsec, there is obtained an outstanding effect that a light source difficult to induce unnecessary interference can be realized.

In the present invention, moreover, the light source driving section drives the light source section, the light receiving section receives the light from the light source section via an object to be measured, the processing means calculates the distance up to the object to be measured on the basis of the light signal received by the light receiving section, the light source section constituted by a laser diode emits a visible or invisible light beam, and the light source driving section can drive the light source section with a pulse shorter than 3 nsec. Thus, a large peak power is obtained and it is possible to realize a long distance measurement.

## Claims

1. A light source means for use in the measurement of a distance, comprising a light source section and a light source driving section for driving said light source section, said light source section comprising an SLD (super-luminescence diode) for emitting a visible or invisible light beam.

2. A light source means for use in the measurement of a distance, comprising a light source section and a light source driving section for driving said light source section with a pulse shorter than 3 nsec, said light source section comprising a laser diode for emitting a visible or invisible light beam.

3. A light wave range finder comprising a light source section, a light source driving section for driving said light source section, a light receiving section for receiving light emitted from said light source section via an object to be measured, and a processing means for calculating a distance up to the object to be measured on the basis of a light signal received by said light receiving section, said light source section comprising an SLD (super-luminescence diode) for emitting a visible or invisible light beam.

4. A light wave range finder comprising a light source section, a light source driving section for driving said light source section, a light receiving section for receiving light from said light source section via an object to be measured, and a processing means for calculating a distance up to the object to be measured on the basis of a light signal received by said light receiving section, said light source section comprising a laser diode for emitting a visible or invisible light beam, and said light source driving section driving said light source section with a pulse shorter than 3 nsec.

5. A laser pointer using the light source means of claim 1 or claim 2, which light source means is for emitting a visible light.
